# EUROPÄISCHE PATENTSCHRIFT

(11) **EP 0 938 822 B1**
(45) Veröffentlichungstag und Bekanntmachung des Hinweises auf die Patenterteilung: **11.02.2004**
(21) Anmeldenummer: 97948721.2
(22) Anmeldetag: 06.11.1997
(51) Int. Cl.: H04Q 7/22, H04Q 7/38, H04B 7/26

(54) **VERFAHREN UND BASISSTATIONSSYSTEM ZUR KONFIGURIERUNG EINER FUNKSCHNITTSTELLE ZWISCHEN EINER MOBILSTATION UND EINER BASISSTATION EINES ZEITMULTIPLEX-MOBILFUNKSYSTEMS FÜR EINE PAKETDATENÜBERTRAGUNG**
PROCESS AND BASE STATION SYSTEM FOR CONFIGURING AN AIR INTERFACE BETWEEN A MOBILE STATION AND A BASE STATION IN A TIME-DIVISION MULTIPLEX MOBILE RADIO TELEPHONE SYSTEM FOR PACKET DATA TRANSMISSION
PROCEDE ET SYSTEME DE STATION DE BASE POUR LA CONFIGURATION D'UNE INTERFACE RADIO ENTRE UNE STATION MOBILE ET UNE STATION DE BASE D'UN SYSTEME RADIO TELEPHONIQUE MOBILE A MULTIPLEXAGE DANS LE TEMPS POUR UNE TRANSMISSION DE DONNEES PAR PAQUETS

(30) Priorität: 18.11.1996 DE 19647629; 16.12.1996 DE 19652303
(43) Veröffentlichungstag der Anmeldung: 01.09.1999
(73) Patentinhaber: SIEMENS AKTIENGESELLSCHAFT, 80333 München (DE)
(72) Erfinder: MENZEL, Christian, D-82216 Maisach (DE); ÖTTL, Martin, D-82362 Weilheim (DE)
(86) Internationale Anmeldenummer: PCT/DE1997/002583
(87) Internationale Veröffentlichungsnummer: WO 1998/023106

(56) Entgegenhaltungen:
- EP-A- 0 681 406
- DE-A- 4 402 903
- BRASCHE G: "EVALUATION OF A MAC PROTOCOL PROPOSED FOR A GENERAL PACKET RADIO SERVICE IN GSM" IEEE INTERNATIONAL SYMPOSIUM ON PERSONAL, INDOOR AND MOBILE RADIO COMMUNICATIONS, Bd. 2, 15. Oktober 1996, Seiten 668-672, XP000198338
- DECKER P: "A PACKET RADIO PROTOCOL FOR GROUP COMMUNICATION SUITABLE FOR THE GSM MOBILE RADIO NETWORK" IEEE INTERNATIONAL SYMPOSIUM ON PERSONAL, INDOOR AND MOBILE RADIO COMMUNICATIONS, 1994, Seiten 934-938, XP000197665

## Beschreibung

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung physikalische Ressourcen zwischen den zwei Kommunikationsendgeräten bereitgestellt werden.

Bei der Datenübertragung über logische Verbindungen ist eine dauerhafte Bereitstellung von physikalischen Ressourcen nicht nötig. Ein Beispiel für eine solche Datenübertragung ist die Paketdatenübertragung. Hier besteht während der Dauer der gesamten Datenübertragung eine logische Verbindung zwischen den zwei Kommunikationsendgeräten, jedoch werden physikalische Ressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Das aus der deutschen Patentschrift DE 44 02 903 A1 bekannte Paketdatenübertragungsverfahren bietet sich insbesondere für Kommunikationssysteme mit begrenzten physikalischen Ressourcen an. Beispielsweise in Mobilfunksystemen, wie dem GSM-Mobilfunksystem (Global System for Mobile Communications), sind die physikalischen Ressourcen im Frequenzbereich - Anzahl der Frequenzkanäle und Zeitschlitz - beschränkt und müssen rationell genützt werden.

Das GSM-Mobilfunksystem ist ein Beispiel für ein Zeitmultiplex-Mobilfunksystem, wobei Zeitschlitze innerhalb eines Frequenzkanals auf verschiedene Kommunikationsendgeräte aufgeteilt werden können. Die netzseitige Funkstation eines Mobilfunknetzes ist eine Basisstation, die über eine Funkschnittstelle mit Mobilstationen kommuniziert. Die Übertragung von einer Mobilstation zur Basisstation wird als Aufwärtsrichtung, die Übertragung von der Basisstation zu einer Mobilstation als Abwärtsrichtung bezeichnet. Ein Kanal, der für die Paketdatenübertragung reserviert ist, wird durch zumindest einen Zeitschlitz pro Zeitmultiplexrahmen gebildet. Weiterhin bezeichnen die Trägerfrequenz und evtl. eine Frequenzsprungsequenz den Kanal.

Das GSM-Mobilfunksystem wurde ursprünglich zur Übertragung von Sprache konzipiert, wobei ein Kanal für die ständige Informationsübertragung zwischen Mobilstation und Basisstation reserviert wurde. Bei der Paketdatenübertragung wird jedoch ein gemeinsamer Kanal zur Paketdatenübertragung für mehrere Mobilstationen genutzt. Zusätzlich zu den Paketdaten werden auch Signalisierungsinformationen übertragen, für die in zyklischen Abständen ein Zeitschlitz innerhalb des Kanals vorgesehen ist.

Die Unterscheidung in logische und physikalische Verbindungen bringt es mit sich, daß für eine Mobilstation zwar eine logische Verbindung existiert, doch über eine gewisse Zeitspanne keine Paketdaten übertragen werden. Solange jedoch keine Übertragung von der Mobilstation zur Basisstation erfolgt, sind Messungen der Basisstation bezüglich der Übertragungsverhältnisse von der Mobilstation nicht möglich. Zuvor berechnete Werte verlieren ihre Gültigkeit und müssen bei erneuter Zuweisung von physikalischen Kanälen neu bestimmt werden bzw. die Basisstation hat sicherzustellen, daß die Übertragungsverhältnisse derart eingestellt werden, daß in jedem Fall eine gesicherte Übertragung möglich ist. Letzteres führt beispielsweise zu einer überhöhten oder gar maximalen Sendeleistungseinstellung.

Der Erfindung liegt folglich die Aufgabe zugrunde, ein Verfahren und eine Basisstationssystem zur Konfigurierung einer Luftschnittstelle für eine Paketdatenübertragung anzugeben, bei denen die Zeitverzögerung zur Erlangung einer konfigurierten Funkschnittstelle zwischen einer Mobilstation und einer Basisstation verringert wird. Diese Aufgabe wird durch das Verfahren nach den Merkmalen des Patentanspruchs 1 und durch das Basisstationssystem nach den Merkmalen des Patentanspruchs 9 gelöst. Vorteilhafte Weiterbildungen der Erfindung sind den Unteransprüchen zu entnehmen.

Ein erfindungsgemäßes Verfahren zur Konfigurierung der Funkschnittstelle faßt mehrere Zeitschlitze zur Signalisierung innerhalb des Kanals zur Paketdatenübertragung zu einem Signalisierungsblock zusammen. Die Zeitschlitze müssen dabei nicht unmittelbar aufeinanderfolgenden Rahmen angehören. Ein solcher Signalisierungsblock ist insbesondere für die Abwärtsrichtung von Bedeutung, da über ihn Infomationen zur Konfigurierung der Funkschnittstelle für die Mobilstation, beispielsweise der Sendepegel bzw. die Vorhaltzeit (Timing Advance), enthalten sind. Das Zusammenfassen von Zeitschlitzen zu einem Signalisierungsblock bewirkt, daß die Zeitdauer bis zur Kompletierung des Signalisierungsblockes auf der Empfangsseite minimal ist. Die Mobilstationen werden folglich schnell mit den zur Konfigurierung der Funkschnittstelle benötigten Informationen versorgt. Über einen Signalisierungsblock ist die Signalisierung zur mehreren Mobilstationen möglich.

Das Zusammenfassen der Konfigurationsdaten in einer Nachricht spart Übertragungskapazität, die für Nachbarzellenmessungen oder anderweitige Signalisierungsinformationen nunmehr zur Verfügung steht.

Die Zuweisung ist vorteilhafterweise unabhängig von einer Paketdatenübertragung von oder zur Mobilstation. Durch diese feste Zuweisung eines Zeitschlitzes zur Signalisierung auch für Mobilstationen, denen momentan kein physikalischer Kanal zugewiesen ist, kann durch die Basisstation eine fortlaufende Messung zur Funkschnittstelle durchgeführt werden. Bei Wiederaufnahme der Paketdatenübertragung liegen somit sofort gültige Meßwerte zur Konfigurierung der Funkschnittstelle vor.

Gemäß einer vorteilhaften Ausgestaltung der Erfindung werden auch mehrere aufeinanderfolgende Zeitschlitze zur Paketdatenübertragung des Kanals zu einem Paketdatenblock zusammengefaßt. Indem erst die Informationen mehrerer Zeitschlitze einen Paketdatenblock ergeben, ist es möglich, die Informationen eines Paketdatenblockes zu verschachteln und eine Rekonstruktion der Informationen zu erleichtern. Die Verschachtelung kann ebenfalls auf die Signalisierungsdaten angewendet werden.

Die Konfigurationsdaten für eine Mobilstation können zusammen mit den Konfigurationsdaten für andere Mobilstationen in einem einzigen Zeitschlitz zur Signalisierung in Abwärtsrichtung, in diesem Fall vorteilhafterweise in Wiederholung oder mit einer Kodierung bzw. Fehlererkennung versehen, oder mehreren nicht aufeinanderfolgenden Zeitschlitzen zur Signalisierung übertragen werden. Im letzteren Fall bringt die Verschachtelung einen Fehlerschutz. Welche Zeitschitze zu einem solchen Signalisierungsblock zusammengefaßt werden kann eingestellt werden. Bei einer solchen Nutzung z.B. jedes zweiten Zeitschlitzes zur Signalisierung können die dazwischenliegenden Zeitschlitze zu Nachbarzellenmessungen genutzt werden.

Der Anteil der Zeitschlitze für die Nachbarzellenmessungen kann weiter erhöht werden, wenn weniger Konfigurationsdaten (beispielsweise nur die Vorhaltzeit) übertragen werden bzw. nur wenige Mobilstationen zu versorgen sind. Hierbei kann eine zyklische Anpassung der Sequenz des Zusammenfassens vorgesehen sein. Eine solche Anpassung schafft eine verbesserte Anpassung des Signalisierungsaufwandes an die tatsächlichen Bedürfnisse der Mobilstationen für eine Paketdatenübertragung.

Gemäß der Erfindung ist ein geschlossener Regelkreis für die Vorhaltzeit erreichbar, da Mobilstationen in Aufwärtsrichtung Zeitschlitze zur Signalisierung zugewiesen sind und in Abwärtsrichtung Signalisierungsblöcke für die Mobilstationen mit kurzer Verzögerungszeit eintreffen. An diesem Regelkreis sind vorteilhafterweise nur die Mobilstation und die Basisstation beteiligt. Da für diese Signalisierung im Gegensatz zur Paketdatenübertragung keine konkrete Zuordnung zwischen einer Mobilstation und einem Datenblock (wird üblicherweise in einem Basisstationscontroller durchgeführt) nötig ist, kann die Basisstation allein die Einstellung der Vorhaltzeit vornehmen. Hierbei entfällt Signalisierungsaufwand zwischen der Basisstation und dem Basisstationscontroller.

Die Konfiguration für die Vorhaltzeit und die Sendeleistungseinstellung erfolgt gemäß einer weiteren Ausgestaltung der Erfindung unabhängig voneinander. Die Vorhaltzeit wird nach einem geschlossenen Regelkreis zwischen Mobilstation und Basisstation bestimmt, wobei durch geeignete Auswahl der Zeitschlitze zur Signalisierung ein längerer Zyklus zwischen zwei Bestimmungen vorgesehen werden kann. Die Vorhaltzeit braucht angesichts der zur Signalausbreitungsgeschwindigkeit relativ langsamen Bewegung der Mobilstation nur im Abstand von einigen Sekunden bestimmt werden.

Bei der Bestimmung der Sendeleistungseinstellung der Basisstation wird die Sendeleistung vorteilhafterweise auf die Mobilstation mit den schlechtesten Übertragungsverbindungen auf dem gemeinsamen Kanal ausgerichtet. Dazu können unabhängig von einer Bestimmung der Vorhaltzeit offene oder geschlossene Regelkreise eingerichtet werden. Bei starken Unterschieden zwischen den für einzelne Mobilstationen benötigten Sendeleistungen und bei einem Vorhandensein von mehreren gemeinsamen Kanälen ist es vorteilhaft, die Mobilstationen entsprechend der benötigen Sendeleistung den Kanälen zuzuordnen.

Vorteilhafterweise erfolgt die Paketdatenübertragung in beide Übertragungsrichtungen, d.h. in Aufwärtsrichtung und Abwärtsrichtung, unabhängig voneinander. Eine Mobilstation kann folglich in Aufwärtsrichtung Daten senden oder in Abwärtsrichtung aus dem Netz Daten empfangen. Für eine Mobilstation kann auch eine Paketdatenübertragung in beide Richtungen vorgesehen sein. Die Trennung in Aufwärts- und Abwärtsrichtung ermöglicht eine große Flexibilität bei der Nutzung der funktechnischen Ressourcen und natürlich auch bei der Gestaltung der Mobilstationen, die gegebenenfalls nur senden oder empfangen.

Gemäß einer weiteren vorteilhaften Ausgestaltung sind die Mobilstationen zusätzlich zu ihren Bezeichnungen innerhalb des Mobilfunksystems für die Paketdatenübertragung mit Kurzkennungen bezeichnet. Über die Zeitschlitze zur Signalisierung in Abwärtsrichtung werden den Mobilstationen durch Kurzkennungen und Zeitschlitzbezeichnungen enthaltende Indikatormeldungen ein oder mehrerer Zeitschlitze zur Signalisierung in Aufwärtsrichtung zugewiesen. Die Kurzkennungen ermöglichen eine verbesserte Ressourcennutzung zwischen dem Netz und den Mobilstationen über die Funkschnittstelle, da sie unabhängig von im Netz bekannten Adressen für die Mobilstationen sind.

Vorteilhafterweise wird von einer Mobilstation innerhalb eines Zeitschlitzes zur Signalisierung eine abgeschlossene Meldung an die Basisstation übermittelt. Diese abgeschlossene Meldung enthält beispielsweis Empfangswerte (RXLEV, RXQUAL) der Mobilstation für Signale der Basisstation, wodurch eine sofortige Sendeleistungseinstellung der Basisstation bei einer Paketdatenübertragung in Abwärtsrichtung möglich ist. Indem eine geschlossene Meldung pro Zeitschlitz übermittelt wird, verringert sich die Zeit bis zum Vorliegen des Empfangspegels der Mobilstation bei der Basisstation und die Zeit für die Konfigurierung der Funkschnittstelle. Die Basisstation bestimmt aus Aussendungen zur Signalisierung in Aufwärtsrichtung die Vorhaltzeit bzw. den Empfangspegel der Basisstationen in Bezug auf die jeweilige Mobilstation.

Der oder die bestimmten Werte bzw. Regelwerte für die Vorhaltzeit und die Sendeleistung werden der Mobilstation in Abwärtsrichtung übermittelt, worauf auch diese die notwendigen Einstellungen zur Konfigurierung der Funkschnittstelle vornehmen kann.

Die Konfigurierung wird weiter beschleunigt, wenn die Bestimmung der Vorhaltzeit und/oder des Empfangspegels der Basisstation zusätzlich aus den Zeitschlitzen zur Paketdatenübertragung vorgenommen wird. Auch durch die Zuweisung von Kurzkennungen zu Mobilstationen kann die Einstellzeit der Konfiguration beeinflußt werden. Werden beispielsweise einer Mobilstation mehrere Kurzkennungen zugewiesen, wird die Einstellzeit verkürzt. Ebenso ist es möglich, durch entsprechende Auswahl bestimmter Kurzkennungen zum Ende eines Makrorahmens, die Verzögerungszeiten klein zu halten. Auch die Beschränkung der Anzahl der Kurzkennungen führt zu einer schnelleren Wiederbenutzbarkeit eines Zeitschlitzes zur Signalisierung für eine Mobilstation und zu einer Verkürzung der Verzögerungszeit. Die Anzahl der Kurzkennungen wird vorteilhafterweise entsprechend den Übertragungsverhältnissen und der Anzahl für den Paketdatendienst vorgesehenen Mobilstationen eingestellt.

Werden mehrere Zeitschlitze zur Signalisierung in Abwärtsrichtung zu einem Signalisierungsblock zusammengefaßt, dann erfolgt vorteilhafterweise die Signalsierung gleichzeitig für mehrere Mobilstationen. Die Signalisierung in Abwärtsrichtung kann jedoch ebenfalls innerhalb von Paketdaten erfolgen, so daß beispielsweise die Sendeleistungseinstellung kontinuierlich, ohne Nutzung von Zeitschlitzen zur Signalisierung angepaßt werden kann, und zusätzliche Zeitschlitze zur Nachbarzellenausmessung zur Verfügung stehen.

Auch durch die Wahl von bestimmten Sendeblocktypen kann der Signalisierungsaufwand gesenkt werden. Werden im Gegensatz zu sogenannten Access Burst, normale Sendeblöcke (normal bursts) verwendet, ist eine Empfangsleistungsbestimmung durch Mittelung über eine größere Anzahl von Bits möglich, wodurch die Meßgenauigkeit steigt bzw. eine geringere Anzahl von wiederholten Meßwerten zur Sendeleistungseinstellung benötigt wird. Solche längeren Sendeblöcke werden vorteilhafterweise zur Sendeleistungseinstellung verwendet, wenn bereits gültige Werte für die Vorhaltzeit vorliegen.

Die Erfindung wird nachfolgend bezugnehmend auf zeichnerische Darstellungen anhand von Ausführungsbeispielen näher erläutert.

Dabei zeigen
- FIG 1: ein Blockschaltbild eines Zeitmultiplex-Mobilfunksystems zur Paketdatenübertragung,
- FIG 2: einen Frequenzkanal mit Zeitmultiplex,
- FIG 3: die Zeitschlitze eines Kanals für eine Paketdatenübertragung, und

- Tabelle 1, 2 und 3: die Benutzung von Zeitschlitzen zur Signalisierung.

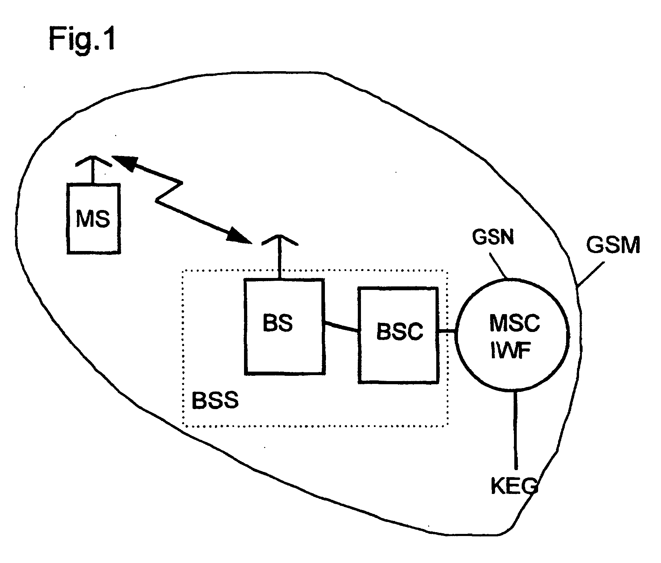

Das Zeitmultiplex-Mobilfunksystem nach FIG 1 ist beispielsweise ein GSM-Mobilfunknetz GSM, das zumindest ein Basisstationssystem BSS mit einer Steuereinrichtung BSC und einer Basisstation BS enthält. Im Funkbereich der einen dargestellten Basisstation BS befinden sich Mobilstationen MS. Das Basisstationssystem BSS stellt die Verbindung zu weiteren Einrichtungen des GSM-Mobilfunknetzes GSM her. Die Steuereinrichtung BSC kann in einem Basisstationscontroller, in der Basisstation BS oder als eigenständige Einheit realisiert werden.

Diese weiteren Einrichtungen sind z.B. eine Mobilvermittlungsstelle MSC und eine Einheit zur Realisierung von Interworking-Funktionen IWF. Das Zusammenwirken von Mobilvermittlungsstelle MSC und Interworking-Funktionen IWF ergibt eine Paketvermittlungsstelle, die auch als GSN (GPRS support node bezeichnet wird. Diese Paketvermittlungsstelle ist an eine MSC zur Sprachvermittelung angeschlossen, alternativ könnte sie als abgesetzte eigene Einheit realisiert werden.

Das GSM-Mobilfunknetz GSM kann mit weiteren Kommunikationsnetzen verbunden sein. Beispielhaft ist ein weiteres Kommunikationsendgerät KEG mit dem GSM-Mobilfunknetz verbindbar oder selbst Bestandteil dieses GSM-Mobilfunknetzes GSM.

Das GSM-Mobilfunknetz GSM soll zur Paketdatenübertragung parallel zur bekannten Sprachübertragung genutzt werden. Dabei kann die Einrichtung zur Realisierung von Interworking-Funktionen IWF die Kopplung des GSM-Mobilfunknetzes GSM mit Datenübertragungsnetzen und damit zum weiteren Kommunikationsendgerät KEG herstellen.

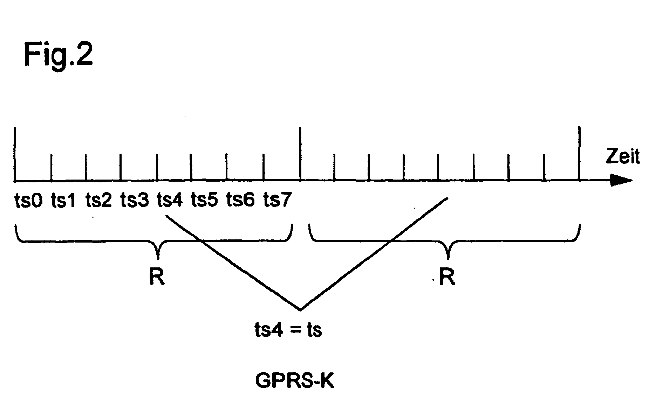

Die Funkschnittstelle zwischen den Mobilstationen MS und einer Basisstation BS ist durch eine Frequenz und zumindest einen Zeitschlitz ts charakterisiert. Nach FIG 2 werden beispielsweise acht Zeitschlitze ts (ts0 bis ts7) zu einem Rahmen R zusammengefaßt. Der Rahmen R, wiederholt sich zyklisch, wobei zu einem Kanal ein wiederkehrender Zeitschlitz beispielsweise der Zeitschlitz ts = ts4 gehört. Dieser Zeitschlitz ts wird im folgenden als Kanal GPRS-K für die Paketdatenübertragung im Sinne des Dienstes GPRS (General Paket Radio Services) verwendet.

Soll eine Mobilstation MS diesen Dienst nutzen, dann führt sie entsprechend der GSM-Terminologie einen willkürlichen Zugriff (Random Access) mit einem kurzen sogenannten access burst durch und wechselt auf einen dedizierten Kontrollkanal. Es folgt eine Authentifikation und das Setzen des Kontexts bezüglich einer logischen Verbindung (standby state). Soll das weitere Kommunikationsendgerät KEG über den Paketdatendienst mit einer Mobilstation MS kommunizieren, erfolgt netzseitig ein Anruf (Paging) sowie der geschilderte willkürliche Zugriff.

Für den Fall, daß die Mobilstation MS Datenpakete senden oder empfangen soll (ready state), findet beim Bestehen einer logischen Verbindung ein weiterer willkürlicher Zugriff statt. Hierbei wird der Mobilstation MS auch eine Kurzkennung id und der entsprechende GPRS-Kanal GPRS-K zugewiesen. Worauf netzseitig die Vorhaltzeit (Timing Advance) ta und die Empfangspegel pb in der Basisstation BS bestimmt werden. Daraufhin werden der Mobilstation MS vier aufeinanderfolgende Zeitschlitze T als ein Paketdatenblock TCH in Aufwärtsrichtung zugewiesen. Gegebenenfalls wird zusätzlich eine Angabe zur Sendeleistungskontrolle übertragen.

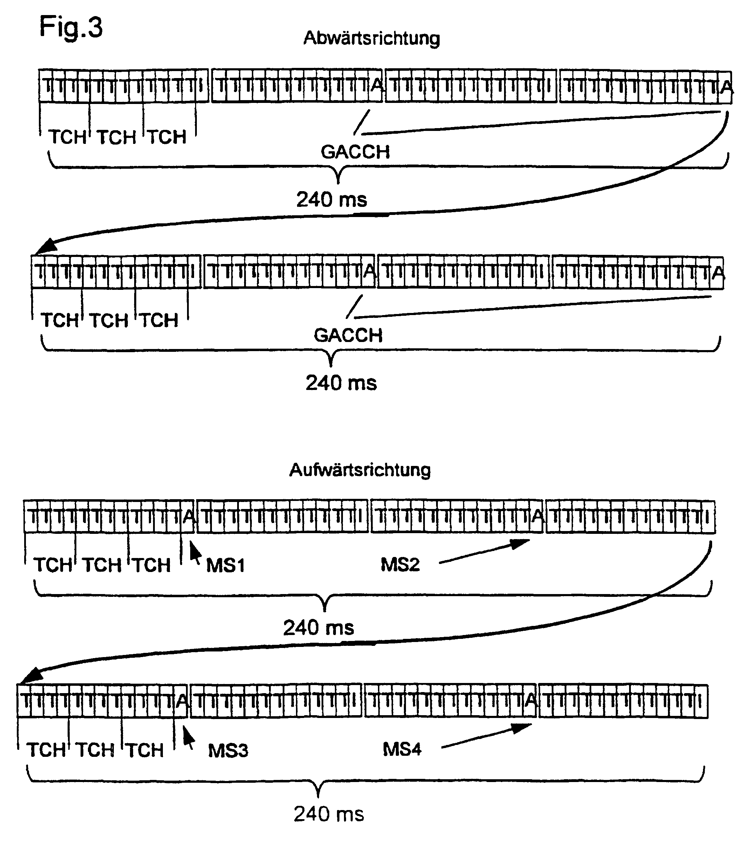

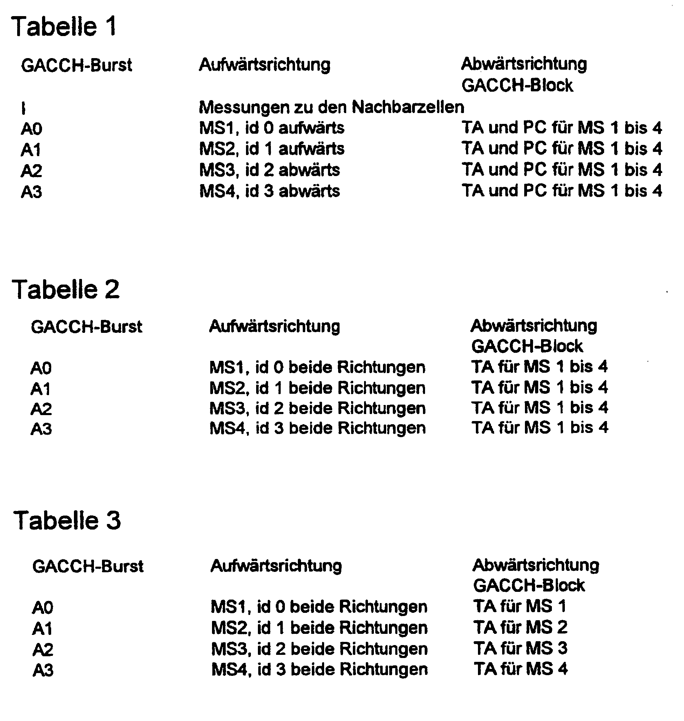

Die Paketdatenübertragung und die zugehörige Signalisierung soll nun anhand von FIG 3 und der Tabellen 1 und 2 gezeigt werden.

Es werden jeweils vier Zeitschlitze T zur Paketdatenübertragung zu einem Paketdatenblock TCH zusammengefaßt. Drei solche Paketdatenblöcke TCH und ein Zeitschlitz A,I zur Signalisierung wiederholen sich viermal zu einem Makrorahmen, der 52 Rahmen R umfaßt. Dies gilt sowohl für die Aufwärtsals auch für die Abwärtsrichtung. Weiterhin bilden zwei solcher Makrorahmen wiederum einen Rahmen höherer Ordnung. Ein Makrorahmen dauert 240 ms.

Die Informationen eines Paketdatenblockes TCH mit vier Zeitschlitzen T sind verschachtelt. Die Zuweisung von Paketdatenblöcken TCH zu verschiedenen Mobilstationen MS erfolgt in Aufwärts- und Abwärtsrichtung flexibel auf eine oder mehrere Mobilstationen MS. Damit können verschiedene Datenraten realisiert werden. Zwischen den Mobilstationen MS kann über den Zugriff auf den GPRS-Kanal anhand von Priorisierungen entschieden werden. Im folgenden werden Aufwärtsrichtung und Abwärtsrichtung getrennt betrachtet, wobei eine Mobilstation MS durchaus in beide Richtungen kommunizieren kann. Die Zuordnung von Paketdatenblöcken TCH während des Bestehens einer logischen Verbindung erfolgt im Band, d.h. innerhalb der Paketdatenblöcke TCH werden den Mobilstationen MS durch Indikatormeldungen angezeigt, wer folgende Paketdatenblöcke TCH nutzen kann.

In Abwärtsrichtung werden nicht nur vier aufeinanderfolgende Zeitschlitze T zur Paketdatenübertragung verschachtelt, sondern es findet auch eine Verschachtelung der Signalisierungsinformationen statt, die einen Signalisierungsblock GACCH bilden. Dabei wird gemäß Fig. 3 jeder zweite Zeitschlitz A zur Signalisierung zum Signalisierungsblock GACCH zusammengefaßt, währenddessen dazwischenliegende Zeitschlitze I zu Messungen der Mobilstationen MS in Nachbarzellen verwendet werden. Die Abfolge von Zeitschlitzen A,I zur Signalisierung und Nachbarkanalmessung kann auch einer anderen Sequenz, beispielsweise A/I = 1/3 folgen. Ein Umschalten der Sequenzen wird nach den Übertragungsbedinungen von der Basisstation BS vorgenommen.

Die Nachbarzellenmessungen dienen der Ermittelung von Basisstationen BS, die bei einer Verschlechterung der Übertragungsbedingungen auf dem momentan zugewiesenen Kanal ausgewählt werden können. In der Mobilstation liegt durch diese Messungen eine Prioritätsliste vor.

Ein Signalisierungsblock GACCH beinhaltet dabei Informationen für mehrere Mobilstationen MS, siehe dazu Tabelle 1 und Tabelle 2. Alternativ - Tabelle 3 - ist es möglich die Anzahl der Zeitschlitze pro Signalisierungsblock GACCH zu verringern und zusätzlich oder alternativ zu einer Verschachtelung die Konfigurationsdaten (Vorhaltzeit TA und/oder Sendeleistungseinstellung PC) in einem Zeitschlitz mehrfach zu übertragen bzw. sie mit einem weiteren Schutz zu versehen, z.B. durch eine Kodierung.

Besonders vorteilhaft ist das erfindungsgemäße Verfahren, wenn lediglich eine Vorhaltzeitbestimmung vorgenommen wird und diese wie nachstehend geschildert signalisiert wird. Die Sendeleistungsermittlung erfolgt davon unabhängig. Durch eine solche Trennung der Ermittelung beider Konfigurationsdaten TA, PC entsteht ein höhere Flexibilität bei der Konfigurierung der Funkschnittstelle. Zur Vereinfachung wird jedoch im folgenden von einem gleichartigen Regelkreis bei der Bestimmung von Vorhaltzeit TA und Sendeleistungseinstellung PC ausgegangen.

Beispielsweise enthält der GACCH-Block die Werte für die Vorhaltzeit TA und die Sendeleistungseinstellung PC (z.B. Empfangspegel pb der Basisstation BS oder die geforderte Sendeleistung) für die Mobilstationen 1 bis 4. In diesem Fall beträgt also die Dauer bis zur Wiederholung der Vorhaltzeit TA und der Sendeleistungswerte PC 480 ms. Erfolgt eine Signalisierung nur für zwei Mobilstationen, beispielsweise zwei Mobilstationen, die in Aufwärtsrichtung senden, kann die Anzahl der Kurzkennungen id auf zwei reduziert werden und die Verzögerungszeit beträgt nunmehr 240 ms.

In Aufwärtsrichtung erfolgt die Zuordnung der Zeitschlitze A zur Signalisierung folgendermaßen. Nach Tabelle 1 erfolgt die Zuweisung der Zeitschlitze A0 bis A1 für die Mobilstationen 1 bis 2 in Aufwärtsrichtung (Kurzkennungen id 0 bis 1) und die Zeitschlitze A2 bis A3 für die Mobilstationen MS 2 bis MS3 in Abwärtsrichtung (Kurzkennungen id 2 bis 3). Kommunizieren die Mobilstationen MS sowohl in Aufwärts- als auch in Abwärtsrichtung, dann erfolgt die Zuweisung der Zeitschlitze A zur Signalisierung gemäß Tabelle 2.

Bei der Zuweisung nach Tabelle 1, also der getrennten Betrachtung von Aufwärtsrichtung und Abwärtsrichtung sendet jede Mobilstation MS in dem ihr zugeordneten Zeitschlitz A zur Signalisierung einen speziell kodierten access burst an die Basisstation BS. Darin signalisiert sie, mit welcher Feldstärke und Qualität (RXLEV, RXQUAL) die Signalisierungsblöcke GACCH der Basisstation BS in Abwärtsrichtung empfangen wurden. Die Basisstation BS mißt die Aussendungen (zugewiesene Zeitschlitze A zur Signalisierung) der Mobilstation MS aus, um eine Vorhaltzeit TA und eine Sendeleistung bzw. die Sendeleistungsänderung PC der Mobilstation MS zu bestimmen und ihr zu signalisieren. Damit erhält die Mobilstation MS Werte, die sie benutzt wenn Paketdatenblöcke TCH in Aufwärtsrichtung gesendet werden.

Die von der Mobilstation MS gemeldeten Empfangspegel pm benutzt die Basisstation BS dazu, eine angemessene Sendeleistung einzustellen, wenn nachfolgend Paketdatenblöcke TCH für die Datenübertragung in Abwärtsrichtung an die Mobilstation MS gesendet werden. Für die Aktualität der Vorhaltzeiten TA und Sendeleistungswerte in Aufwärtsrichtung ergeben sich folgende Verzögerungszeiten: Die Mobilstation MS erhält im Abstand von 480 ms neue Werte. Bei der Sequenz der Zeitschlitze I, A wird darauf geachtet, daß die Zeit zwischen Signalisierung in Aufwärtsrichtung durch eine Mobilstation MS und ein für diese Mobilstation MS vorgesehenen Übertragung in Abwärtsrichtung gering ist.

Nach Tabelle 3 wurde die Signalisierung in Abwärtsrichtung dahingehend ausgestaltet, daß jeder Mobilstation 1 bis 4 ein individueller Zeitschitz A zur Signalisierung zugewiesen wurde, in dem die Vorhaltzeit TA mit einer zusätzlichen Fehlersicherung übertragen wird. Je weniger Mobilstationen den gemeinsamen Kanal GPRS-K nutzen, um so weniger solche Zeitschlitze A zur Signalisierung werden benötigt und um so mehr Zeitschlitze I stehen zu Nachbarzellenmessungen, zur zusätzlichen Signalisierung (z.B. Verbindung auflösen, Frequenzwechsel) oder auch einer zusätzlichen Datenübertragung zur Verfügung.

Die Ausführungsbeispiele können dahingehend modifiziert werden, daß Kurzkennungen id derart verwendet werden, daß mit Vorzug die Kurzkennungen id 1 bzw. 3 benutzt werden. In diesem Falle ergeben sich Verzögerungszeiten nahe dem günstigsten Fall von 240 ms. Auch bei einer doppelten Verwendung von Kurzkennungen id verringert sich der Abstand zwischen dem Eintreffen neuer Werte. Wird die Zahl der Kurzkennungen weiter beschränkt, dann verkürzt sich auch die Verzögerungszeit. Sind für längere Zeiten nicht aktualisierte Werte akzeptabel, so kann die Anzahl der Kurzkennungen id auch in Viererschritten auf 8, 12, 16 usw. erhöht werden.

Die Vergabe der Kurzkennungen id wird insbesondere den Übertragungsbedingungen, d.h. der zuvor registrierten Veränderungen von Vorhaltzeit TA und Sendeleistungsänderungen angepaßt. Ebenso wird berücksichtigt, wieviele Mobilstationen MS die Paketdatenübertragung über den GPRS-Kanal GPRS-K nutzen wollen.

Durch die feste Zuordnung von Zeitschlitzen A zur Signalisierung in Aufwärtsrichtung ist die Basisstation BS ständig über die aktuellen Übertragungsverhältnisse der Funkschnittstelle informiert und Kann entsprecnende Konfigurierung der Funkschnittstelle vornehmen. Für Mobilstationen MS, die derartig in Aufwärtsrichtung signalisieren und denen in Abwärtsrichtung über die Signalisierungsblöcke GACCH die Werte zur Vorhaltzeit TA und zur Sendeleistungseinstellung PC übermittelt werden, existiert ein geschlossener Regelkreis. Der Regelkreis ist auch dann möglich, wenn die Mobilstation MS momentan keine Paketdaten sendet oder empfängt.

Falls jedoch der Mobilstation MS auch Paketdatenblöcke TCH in Aufwärts- oder Abwärtsrichtung zugewiesen sind, können auch dafür Werte für die Vorhaltzeit TA oder den Empfangspegel pb, pb zusätzlich berechnet und übermittelt werden.

Insbesondere eignet sich das paketorientierte Übertragen von Informationen über die Funkschnittstelle für Telematikapplikationen, Fax und Dateiübertragung, Point of Sales Realsierungen, Flottenmanagement und verkehrsleitsysteme.

## Patentansprüche

1. Verfahren zur Konfigurierung einer Funkschnittstelle zwischen einer Mobilstation (MS) und einer Basisstation (BS) eines Zeitmultiplex-Mobilfunksystems für eine Paketdatenübertragung, wobei
- die Übertragung von einer Mobilstation (MS) zur Basisstation (BS) als Aufwärtsrichtung und von der Basisstation (BS) zu einer Mobilstation (MS) als Abwärtsrichtung bezeichnet wird,
- ein Kanal (GPRS-K) durch zumindest einen Zeitschlitz (ts,T,A) pro Zeitmultiplex-Rahmen (R) gebildet wird,
- die Paketdatenübertragung mehrerer Mobilstationen (MS) über den Kanal (GPRS-K) erfolgt,
- im Kanal (GPRS-K) in zyklischen Abständen ein Zeitschlitz (ts, A) zur Signalisierung vorgesehen ist,
**dadurch gekennzeichnet, daß**
- mehrere Zeitschlitze (ts, A) zur Signalisierung in Abwärtsrichtung zu einem Signalisierungsblock (GACCH) für mehrere Mobilstationen (MS) zusammengefaßt werden,
- der Signalisierungsblock (GACCH) zur Signalisierung von Vorhaltezeiten (TA) benutzt wird, die von den Mobilstationen (MS) beim Senden benutzt werden,
- wobei die Informationen aufeinanderfolgender Zeitschlitze (ts, A) jeweils eines Blocks zur Signalisierung (GACCH) verschachtelt werden.

2. Verfahren nach Anspruch 1,
bei dem die Anzahl der durch einen Signalisierungsblock (GACCH) adressierten Mobilstationen (MS) einstellbar ist.

3. Verfahren nach Anspruch 1 oder 2,
bei dem die Informationen aufeinanderfolgender Zeitschlitze (ts, T) jeweils eines Blocks zur Paketdatenübertragung (TCH) verschachtelt werden.

4. Verfahren nach einem der vorhergehenden Ansprüche,
bei dem die Paketdatenübertragung in beide Übertragungsrichtungen unabhängig voneinander erfolgt.

5. Verfahren nach einem der vorhergehenden Ansprüche,
bei dem die Mobilstationen (MS) für die Paketdatenübertragung zusätzlich mit Kurzkennungen (id) bezeichnet sind und den Mobilstationen (MS) über die Zeitschlitze (ts, A) zur Signalisierung in Abwärtsrichtung durch Indikatormeldungen, die Kurzkennungen (id) und Zeitschlitzbezeichnungen enthalten, ein oder mehrere Zeitschlitze (ts, A) zur Signalisierung in Aufwärtsrichtung zugewiesen werden.

6. Verfahren nach einem der vorhergehenden Ansprüche,
bei dem durch die Basisstation (BS) den Mobilstationen (MS) die bestimmte Vorhaltezeit (TA) und/oder ein zu einem bestimmten Empfangspegel (pb) der Basisstation (BS) korrespondierender Wert (PC) über die Zeitschlitze (ts, A) zur Signalisierung in Abwärtsrichtung übermittelt wird.

7. Verfahren nach einem der Ansprüche 5 oder 6,
bei dem einer Mobilstation (MS) mehrere Kurzkennungen (id) zugewiesen werden.

8. Verfahren nach einem der Ansprüche 5 bis 7,
bei dem die Anzahl der Kurzkennungen (id) für einen Kanal entsprechend der Übertragungsverhältnisse einstellbar ist.

9. Verfahren nach einem der Ansprüche 5 bis 8,
bei dem die Anzahl der Kurzkennungen (id) für einen Kanal auf kleiner gleich 4 beschränkt wird.

10. Basisstationssystem (BSS) zur Konfigurierung einer Funkschnittstelle zwischen einer Mobilstation (MS) und einer Basisstation (BS) eines Zeitmultiplex-Mobilfunksystems für eine Paketdatenübertragung, wobei
- die Übertragung von einer Mobilstation (MS) zur Basisstation (BS) als Aufwärtsrichtung und von der Basisstation (BS) zu einer Mobilstation (MS) als Abwärtsrichtung bezeichnet wird,
- ein Kanal (GPRS-K) durch zumindest einen Zeitschlitz (TS, T, A) pro Zeitmultiplex-Rahmen (R) gebildet wird,
- die Paketdatenübertragung mehrerer Mobilstationen (MS) über den (GPRS-K) erfolgt,
- im Kanal (GPRS-K) in zyklischen Abständen ein Zeitschlitz (ts, A) zur Signalisierung vorgesehen ist,
mit einer Steuereinrichtung (BSC) zur Zuweisung von Zeitschlitzen (ts, A) zur Signalisierung in Abwärtsrichtung, **dadurch gekennzeichnet, daß**
- mehrere Zeitschlitze (ts, A) zur Signalisierung in Abwärtsrichtung zu einem Signalisierungsblock (GACCH) für mehrere Mobilstationen (MS) zusammengefaßt werden,
- der Signalisierungsblock (GACCH) zur Signalisierung von Vorhaltzeiten (TA) benutzt wird, die von den Mobilstationen (MS) beim Senden benutzt werden,
- wobei die Informationen aufeinanderfolgender Zeitschlitze (ts, A) jeweils eines Blocks zur Signalisierung (GACCH) verschachtelt werden.

11. Basisstationssystem nach Anspruch 10,
bei dem die Anzahl der durch einen Signalisierungsblock (GACCH) adressierten Mobilstationen (MS) einstellbar ist.

## Claims

1. Method for configuration of a radio interface between a mobile station (MS) and a base station (BS) in a time-division multiplexing mobile radio system for packet data transmission, in which
- the transmission from a mobile station (MS) to the base station (BS) is referred to as the uplink direction, and the transmission from the base station (BS) to a mobile station (MS) is referred to as the downlink direction,
- a channel (GPRS-K) is formed by at least one time slot (ts, T, A) in each time-division multiplex frame (R),
- the packet data transmission from two or more mobile stations (MS) takes place via the channel (GPRS-K),
- one time slot (ts, A) is provided for signalling at cyclic intervals in the channel (GPRS-K),
**characterized in that**
- two or more time slots (ts, A) are combined for signalling in the downlink direction to form a signalling block (GACCH) for two or more mobile stations (MS),
- the signalling block (GACCH) is used for signalling lead times (TA) which are used by the mobile stations (MS) for transmission,
- in which the information in successive time slots (ts, A) of in each case one block for signalling (GACCH) is interleaved.

2. Method according to Claim 1,
in which the number of mobile stations (MS) which are addressed by one signalling block (GACCH) can be varied.

3. Method according to Claim 1 or 2,
in which the information in successive time slots (ts, T) of in each case one block for packet data transmission (TCH) is interleaved.

4. Method according to one of the preceding claims, in which packet data is transmitted independently in both transmission directions.

5. Method according to one of the preceding claims, in which the mobile stations (MS) for packet data transmission are additionally identified by short identifiers (id), and one or more time slots (ts, A) for signalling in the uplink direction is or are assigned to the mobile stations (MS) via the time slots (ts, A) for signalling in the downlink direction by means of indicator messages which contain short identifiers (id) and time slot designations.

6. Method according to one of the preceding claims, in which the specific lead time (TA) and/or a value (PC) which corresponds to a specific reception level (pb) at the base station (BS) are/is transmitted by the base station (BS) to the mobile stations (MS) via the time slots (ts, A) for signalling in the downlink direction.

7. Method according to one of Claims 5 or 6,
in which one mobile station (MS) is assigned two or more short identifiers (id).

8. Method according to one of Claims 5 to 7,
in which the number of short identifiers (id) for one channel can be varied depending on the transmission conditions.

9. Method according to one of Claims 5 to 8,
in which the number of short identifiers (id) for one channel is restricted to not more than four.

10. Base station system (BSS) for configuration of a radio interface between a mobile station (MS) and a base station (BS) in a time-division multiplexing mobile radio system for packet data transmission, in which
- the transmission from a mobile station (MS) to the base station (BS) is referred to as the uplink direction, and the transmission from the base station (BS) to a mobile station (MS) is referred to as the downlink direction,
- a channel (GPRS-K) is formed by at least one time slot (ts, T, A) in each time-division multiplex frame (R),
- the packet data transmission from two or more mobile stations (MS) takes place via the channel (GPRS-K),
- one time slot (ts, A) is provided for signalling at cyclic intervals in the channel (GPRS-K),
having a control device (BSC) for assigning time slots (ts, A) for signalling in the downlink direction,
**characterized in that**
- two or more time slots (ts, A) are combined for signalling in the downlink direction to form a signalling block (GACCH) for two or more mobile stations (MS),
- the signalling block (GACCH) is used for signalling lead times (TA) which are used by the mobile stations (MS) for transmission,
- in which the information in successive time slots (ts, A) of in each case one block for signalling (GACCH) is interleaved.

11. Base station system according to Claim 10,
in which the number of mobile stations (MS) which are addressed by one signalling block (GACCH) can be varied.

## Revendications

1. Procédé de configuration d'une interface radio entre une station mobile (MS) et une station de base (BS) d'un système radiotéléphonique mobile à multiplexage dans le temps pour une transmission de données par paquets,
- la transmission d'une station mobile (MS) vers la station de base (BS) étant qualifiée de sens ascendant et la transmission de la station de base (BS) vers une station mobile (MS) de sens descendant,
- un canal (GPRS-K) étant formé par au moins un intervalle de temps (ts, T, A) par trame de multiplexage dans le temps (R),
- la transmission de données par paquets de plusieurs stations mobiles (MS) se faisant par le biais du canal (GPRS-K),
- un intervalle de temps (ts, A) de signalisation étant prévu à intervalles cycliques dans le canal (GPRS-K),
**caractérisé en ce que**
- plusieurs intervalles de temps (ts, A) de signalisation sont groupés, dans le sens descendant, en un bloc de signalisation (GACCH) pour plusieurs stations mobiles (MS),
- le bloc de signalisation (GACCH) est utilisé pour la signalisation de temps de dérivation (TA) qui sont utilisés par les stations mobiles (MS) lors de l'émission,
- les informations des intervalles de temps consécutifs (ts, A) d'un bloc respectif servant à la signalisation (GACCH) étant imbriquées.

2. Procédé selon la revendication 1, dans lequel le nombre des stations mobiles (MS) adressées par un bloc de signalisation (GACCH) peut être réglé.

3. Procédé selon la revendication 1 ou 2, dans lequel les informations des intervalles de temps consécutifs (ts, T) d'un bloc respectif servant à la transmission de données par paquets (TCH) sont imbriquées.

4. Procédé selon l'une des revendications précédentes, dans lequel la transmission de données par paquets se fait de manière indépendante dans les deux sens de transmission.

5. Procédé selon l'une des revendications précédentes, dans lequel les stations mobiles (MS) sont désignées, en plus, par des indicatifs (id) pour la transmission de données par paquets et un ou plusieurs intervalle/s de temps (ts, A) de signalisation dans le sens ascendant est/sont alloué/s aux stations mobiles (MS) par le biais des intervalles de temps (ts, A) de signalisation dans le sens descendant par des messages indicateurs qui contiennent des indicatifs (id) et des désignations d'intervalles de temps.

6. Procédé selon l'une des revendications précédentes, dans lequel, grâce à la station de base (BS), le temps de dérivation (TA) déterminé et/ou une valeur (PC) correspondant à un niveau de réception déterminé (pb) de la station de base (BS) est/sont transmis aux stations mobiles (MS) par le biais des intervalles de temps (ts, A) de signalisation dans le sens descendant.

7. Procédé selon l'une des revendications 5 ou 6, dans lequel plusieurs indicatifs (id) sont alloués à une station mobile (MS).

8. Procédé selon l'une des revendications 5 à 7, dans lequel le nombre des indicatifs (id) pour un canal peut être réglé en fonction des conditions de transmission.

9. Procédé selon l'une des revendications 5 à 8, dans lequel le nombre des indicatifs (id) pour un canal est limité à un nombre inférieur ou égal à 4.

10. Système de station de base (BSS) pour la configuration d'une interface radio entre une station mobile (MS) et une station de base (BS) d'un système radiotéléphonique mobile à multiplexage dans le temps pour une transmission de données par paquets,
- la transmission d'une station mobile (MS) vers la station de base (BS) étant qualifiée de sens ascendant et la transmission de la station de base (BS) vers une station mobile (MS) de sens descendant,
- un canal (GPRS-K) étant formé par au moins un intervalle de temps (TS, T, A) par trame de multiplexage dans le temps (R),
- la transmission de données par paquets de plusieurs stations mobiles (MS) se faisant par le biais du (GPRS-K),
- un intervalle de temps (ts, A) de signalisation étant prévu à intervalles cycliques dans le canal (GPRS-K),
comprenant un dispositif de commande (BSC) pour l'allocation d'intervalles de temps (ts, A) de signalisation dans le sens descendant,
**caractérisé en ce que**
- plusieurs intervalles de temps (ts, A) de signalisation sont groupés, dans le sens descendant, en un bloc de signalisation (GACCH) pour plusieurs stations mobiles (MS),
- le bloc de signalisation (GACCH) est utilisé pour la signalisation de temps de dérivation (TA) qui sont utilisés par les stations mobiles (MS) lors de l'émission,
- les informations des intervalles de temps consécutifs (ts, A) d'un bloc respectif servant à la signalisation (GACCH) étant imbriquées.

11. Système de station de base selon la revendication 10, dans lequel le nombre des stations mobiles (MS) adressées par un bloc de signalisation (GACCH) peut être réglé.
